# EUROPÄISCHE PATENTSCHRIFT

(11) **EP 3 474 774 B1**
(45) Veröffentlichungstag und Bekanntmachung des Hinweises auf die Patenterteilung: **08.04.2020**
(21) Anmeldenummer: 17732750.9
(22) Anmeldetag: 21.06.2017
(51) Int. Cl.: A61C 15/02

(54) **INTERDENTAL-REINIGER**
INTERDENTAL CLEANER
DISPOSITIF DE NETTOYAGE INTERDENTAIRE

(30) Priorität: 23.06.2016 DE 102016007658
(43) Veröffentlichungstag der Anmeldung: 01.05.2019
(73) Patentinhaber: Sunstar Suisse S.A., 1163 Etoy (CH)
(72) Erfinder: PÖTSCH, Gerhard, 79108 Freibrug (DE); LEISINGER, Christian, 79650 Schopfheim (DE); BUTZ, Jürgen, 79677 Schönau (DE)
(74) Vertreter: Lichti - Patentanwälte Partnerschaft mbB
(86) Internationale Anmeldenummer: PCT/EP2017/000719
(87) Internationale Veröffentlichungsnummer: WO 2017/220200

(56) Entgegenhaltungen:
- EP-A1- 0 277 156
- EP-A1- 0 932 371
- EP-A2- 0 707 836
- CN-Y- 2 710 571
- DE-A1-102011 101 391
- DE-A1-102013 010 782
- JP-A- 2003 245 287

## Beschreibung

Die Erfindung betrifft einen Interdental-Reiniger gemäß dem Oberbegriff des Anspruchs 1.

Bereits seit langer Zeit sind Interdental-Reiniger in Form von stabförmigen Zahnstochern bekannt, die früher aus Holz und später dann aus Kunststoff hergestellt wurden. Um die Reinigungswirkung eines entsprechenden Interdental-Reinigers zu erhöhen, ist es beispielsweise aus der EP 0 707 836 A1, von der im Oberbegriff des Anspruchs 1 ausgegangen wird, aus der CN 2710571 Y, der US 4,922,936 A oder der DE 203 09 295 U1 bekannt, den stabförmigen Träger des Interdental-Reinigers mit einer Beflockung aus Flockfasern zu versehen.

Die Flockfasern müssen sehr gut auf dem stabförmigen Träger befestigt sein, da es für einen Benutzer sehr unangenehm ist, wenn sich die Fasern bei Gebrauch von dem Träger lösen. Der stabförmige Träger hat jedoch im wesentlichen für die Stabilität und Elastizität des Interdental-Reinigers zu sorgen, so dass das Kunststoff-Material des stabförmigen Trägers nicht im Hinblick auf eine möglichst gute Verbindung mit den Flockfasern, sondern allein hinsichtlich der Stabilität und Elastizität ausgewählt werden muss. Es hat sich gezeigt, dass bei denjenigen Kunststoffmaterialien, die dem Träger und somit dem Interdental-Reiniger eine ausreichende Stabilität und Elastizität verleihen, keine zuverlässige Fixierung der Flockfasern gegeben ist.

Der Erfindung liegt die Aufgabe zugrunde, einen Interdental-Reiniger der genannten Art zu schaffen, der einerseits eine ausreichende Stabilität und Elastizität besitzt und bei dem andererseits die Flockfasern sicher gehalten sind.

Diese Aufgabe wird erfindungsgemäß durch einen Interdental-Reiniger mit den Merkmalen des Anspruchs 1 gelöst. Dabei ist vorgesehen, dass der stabförmige Träger in seinem vorderen Endbereich mit einem hülsenförmigen Überzug aus einem weich-elastischen Kunststoff versehen ist und dass die Beflockung auf dem Überzug angeordnet ist.

Erfindungsgemäß wird von der Grundüberlegung ausgegangen, die Beflockung nicht direkt auf dem Träger anzubringen, sondern einen Überzug aus einem weich-elastischen Kunststoff dazwischen zu schalten. Dies hat den Vorteil, dass das Kunststoff-Material des Trägers allein hinsichtlich der Stabilität und Elastizität des Trägers ausgewählt werden kann, da die Beflockung mit dem Träger nicht in Kontakt steht. Der Überzug erfüllt die weitere Funktion, dass der Träger, der vorzugsweise aus einem formstabilen, relativ harten Kunststoff besteht, zumindest in seinem vorderen Endbereich, mit dem er in den Zahnzwischenraum eingeführt wird, durch den Überzug umhüllt ist, so dass die Verletzungsgefahr für den Benutzer verringert ist. Das Kunststoff-Material des Überzugs muss nicht hinsichtlich der Stabilität des Interdental-Reinigers ausgelegt werden, sondern kann im Hinblick auf eine gute Fixierung der Flockfasern ausgewählt und optimiert werden. Auf diese Weise ist eine vollständige Trennung zwischen den Anforderungen an die Stabilität und die Elastizität einerseits sowie an die Fixierung der Flockfasern andererseits erreicht.

Es hat sich als vorteilhaft erwiesen, wenn der Träger aus einem formstabilen Kunststoff, insbesondere Polyprophylen oder Polyamid besteht. Alternativ kann der Träger auch aus Polybutylenterephtalat, Polyester, Polyethylen oder auch aus einem schlagzäh-modifizierten Kunststoff wie Polycarbonat oder Polystyrol bestehen. Dabei kann das Kunststoff-Material des Trägers faserverstärkt sein, wofür beispielsweise Glasfasern und/oder Naturfasern und/oder Karbonfasern Verwendung finden können.

Der Überzug kann vollständig oder zumindest überwiegend aus einem thermoplastischen Elastomer, aus einem thermoplastischen Polyurethan oder aus Silikon bestehen. Gegebenenfalls kann ein weiterer Kunststoff, insbesondere Polyprophylen anteilig dazugegeben sein.

In bevorzugter Ausgestaltung umfasst die Beflockung eine Kleberschicht, auf der die Flockfasern gehalten sind. Die Flockfasern bzw. das Beflockungsmaterial können beispielsweise aus Polyamid, aus Polyprophylen, aus Viskose, aus Acryl, aus Polyester oder auch aus Baumwollfasern oder aus Polybutylenterephthalat bestehen.

Die Länge der Flockfasern liegt vorzugsweise in einem Bereich von 0,2mm bis 2,0mm und insbesondere zwischen 1,0mm und 1,5mm.

Die Feinheit der Flockfasern, die in tex (1 tex= 1g pro 1000m Länge) gemessen wird, liegt vorzugsweise im Bereich von 0,09 tex bis 2,2tex und bevorzugt im Bereich von 0,17 tex bis 0,67tex.

Die Flockfasern können beliebige Farben aufweisen oder sogar einen undefinierten Farbmix besitzen.

In einer möglichen Ausgestaltung der Erfindung kann vorgesehen sein, dass der Überzug vollständig von der Beflockung überdeckt ist.

Alternativ dazu kann vorgesehen sein, dass der Überzug nur in seinem vorderen Endbereich von der Beflockung überdeckt ist. Der von der Beflockung überdeckte vordere Endbereich des Überzugs umfasst dabei vorzugsweise ein Drittel bis die Hälfte der axialen Länge des Überzugs.

In bevorzugter Ausgestaltung der Erfindung ist vorgesehen, dass der Überzug außenseitig mehrere einstückig angeformte, radial nach außen hervorstehende Finger aufweist, die vorzugsweise aus dem gleichen weich-elastischen Material wie der Überzug bestehen. Die Finger bilden verglichen mit der Beflockung eine grobere Strukturierung und dienen der Grobreinigung des Zahnzwischenraums, während die Beflockung der Feinreinigung des Zwischenraums dient. Auf diese Weise sind an einem Interdental-Reiniger unterschiedliche Reinigungsfunktionen erreicht.

In einer möglichen Ausgestaltung der Erfindung ist vorgesehen, dass der Überzug nur in seinem Bereich zwischen seinem vorderen Ende und den Fingern mit der Beflockung versehen ist, d.h. dass der Bereich des Überzugs, in dem die Finger angeordnet sind, von der Beflockung frei ist und insbesondere zwischen den Fingern keine Beflockung vorgesehen ist.

Dies führt zu einer funktionalen Trennung zwischen der Grobreinigung mittels der Finger und der Feinreinigung mittels der Beflockung, da der zwischen den Fingern liegende Bereich des Überzugs frei von der Beflockung ist.

Alternativ kann vorgesehen sein, dass die Beflockung auch oder nur in dem zwischen den Fingern liegenden Bereich des Überzugs angeordnet ist. Diese Ausgestaltung bewirkt, dass beim Einführen des Interdental-Reinigers in den Zwischenraum gleichzeitig eine Reinigung mittels der Finger und eine Reinigung mittels der Beflockung stattfindet.

Der Träger kann einen kreisförmigen, einen polygonalen oder ovalen Querschnitt aufweisen. Um die schwer zugänglichen Bereiche des Interdentalraums zu erfassen, hat es sich als vorteilhaft erwiesen, die Geometrie des Querschnittes dem Aussehen des Interdentalraums, der dreieckförmig ausgestaltet ist, anzupassen. Zu diesem Zweck kann vorgesehen sein, dass der Träger einen dreieckigen Querschnitt besitzt.

Vorzugsweise folgt der Überzug in seiner Außenkontur der Außenkontur des Trägers, d.h. der Überzug sitzt mit einer konstanten Schichtdicke auf dem Träger. Alternativ ist es jedoch auch möglich, dass die Außenkontur des Überzugs von der Querschnittsform des Trägers abweicht, so dass der Überzug den Träger mit einer bereichsweise unterschiedlichen Schichtdicke umgibt.

In einer besonders bevorzugten Ausgestaltung der Erfindung ist vorgesehen, dass der Überzug eine dreieckige Außenkontur besitzt und der Träger einen kreisförmigen, einen polygonalen oder einen ovalen Querschnitt aufweist, so dass spitz zulaufende Eckbereiche der dreieckigen Außenkontur des Überzugs gebildet sind. Dies bringt den Vorteil mit sich, dass die Eckbereiche des aus einem weich-elastischen Kunststoff bestehenden Überzugs sehr flexibel sind und sich dem Zahnzwischenraum gut anpassen können, wenn der Interdental-Reiniger in den Zahnzwischenraum eingeführt wird. Die Eckbereiche der dreieckigen Außenkontur des Überzugs können auf diese Weise nahe an die Zahnflächen herankommen und die am Überzug gehaltenen Flockfasern können in diesen Bereich gut eindringen. Darüber hinaus können die Flockfasern auch noch in den Zahnfleischsaum eindringen und diese Bereiche gut reinigen.

Weitere Einzelheiten und Merkmale der Erfindung sind aus der folgenden Beschreibung von Ausführungsbeispielen unter Bezugnahme auf die Zeichnungen ersichtlich. Es zeigen:
- Fig. 1: eine schematische Seitenansicht eines Interdental-Reinigers gemäß einem 1. Ausführungsbeispiel,
- Fig. 2: eine schematische Seitenansicht eines Interdental-Reinigers gemäß einem 2. Ausführungsbeispiel,
- Fig. 3: eine schematische Seitenansicht eines Interdental-Reinigers gemäß einem 3. Ausführungsbeispiel,
- Fig. 4: eine schematische Seitenansicht eines Interdental-Reinigers gemäß einem 4. Ausführungsbeispiel,
- Fig. 5: den Schnitt V-V in Figur 4,
- Fig. 6: den Schnitt gemäß Fig. 5 in einer 1. alternativen Ausgestaltung und
- Fig. 7: den Schnitt gemäß Fig. 5 in einher 2. alternativen Ausgestaltung.

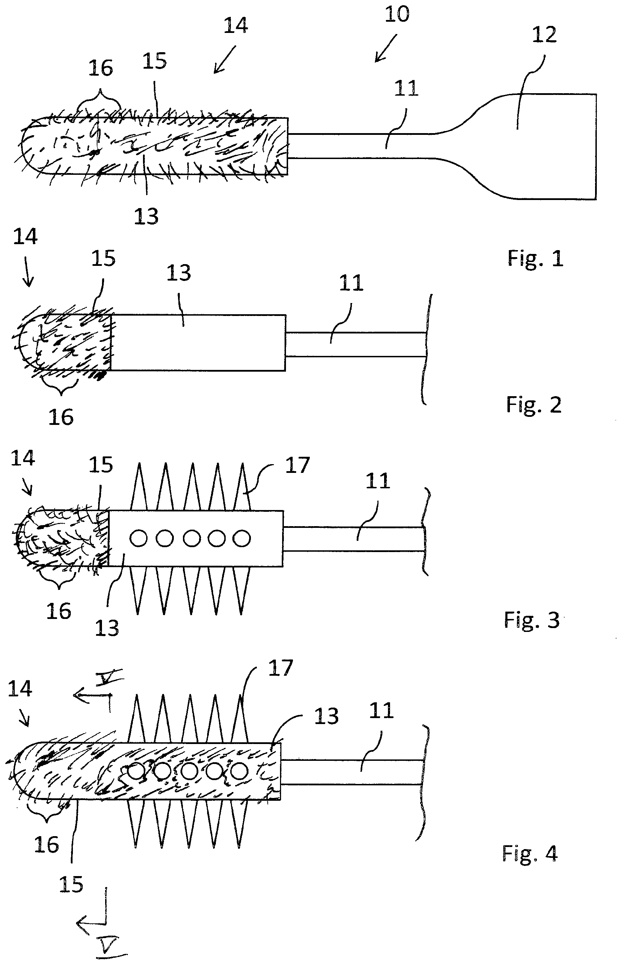

Ein in Figur 1 dargestellter Interdental-Reiniger 10 besitzt einen langgestreckten stabförmigen Träger 11 aus einem formstabilen Kunststoff, der an seinem hinteren, gemäß Figur 1 rechten Ende mit einem Griffteil 12 versehen ist, an dem ein Benutzer den Interdental-Reiniger 10 erfassen kann.

An seinem entgegengesetzten vorderen, gemäß Figur 1 linken Ende ist der stabförmige Träger 11 mit einem hülsenförmigen Überzug 13 aus einem weich-elastischen Kunststoff versehen. Der Überzug 13 überdeckt etwa 1/3 der axialen Länge des Interdental-Reinigers 10 vollständig. Auf der dem stabförmigen Träger 11 abgewandten Außenseite des Überzugs 13 ist eine Beflockung 14 angeordnet. Die Beflockung 14 umfasst eine Kleberschicht 15, in der kurze Flockfasern 16 aus Kunststoff gehalten sind.

Wie Figur 1 zeigt, ist der Überzug 13 bei diesem Ausführungsbeispiel außenseitig vollständig von der Beflockung 14 überdeckt.

Figur 2 zeigt eine Abwandlung des Interdental-Reinigers 10 gemäß Figur 1 und unterscheidet sich von diesem dadurch, dass der Überzug 13 nur in seinem vorderen, Endbereich, der etwa 1/3 bis die Hälfte der axialen Länge des Überzugs 13 umfasst, mit der Beflockung 14 versehen ist, während der Überzug 13 in seinen anderen Bereichen frei von der Beflockung ist.

Figur 3 zeigt eine Weiterbildung des Interdental-Reinigers 10 gemäß Figur 2 und unterscheidet sich von diesem lediglich dadurch, dass in dem vom vorderen gemäß Figur 3 linken Ende zurückgesetzten Bereich des Überzugs 13, in dem keine Beflockung vorgesehen ist, außenseitig mehrere einstückig angeformte, radial nach außen hervorstehende Finger 17 vorgesehen sind, die aus dem gleichen weich-elastischen Material wie der Überzug 13 bestehen. Dies führt dazu, dass im vorderen Bereich des Überzugs 13 die Beflockung 14 und im hinteren bzw. restlichen Bereich des Überzugs 13 die Finger 17 ausgebildet sind. Die zwischen den Fingern 17 liegenden Abschnitte des Überzugs 13 sind hierbei von der Beflockung frei.

Figur 4 zeigt eine Weiterbildung des Interdental-Reinigers 10 gemäß Figur 3 und unterscheidet sich von diesem dadurch, dass nunmehr auch die Bereiche des Überzugs 13, die zwischen den Fingern 17 angeordnet sind, mit der Beflockung 14 versehen sind.

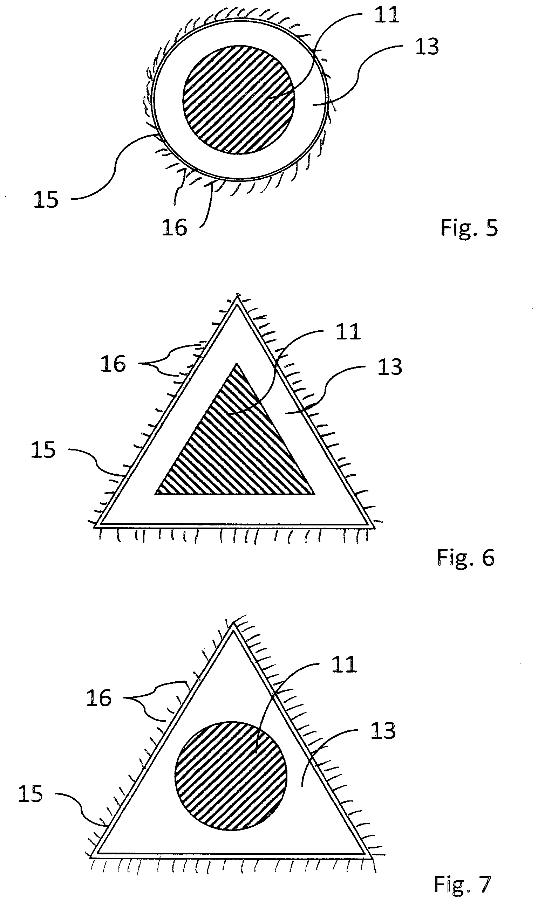

Wie Figur 5 zeigt, besitzt der Träger 11 einen kreisförmigen Querschnitt und ist von dem Überzug 13 mit annähernd konstanter Schichtdicke umgeben, d.h. der Überzug 13 besitzt eine kreisförmige Außenkontur und folgt damit der Außenkontur des Trägers 11. Auf der Außenseite des Überzugs 13 ist die Kleberschicht 15 angeordnet, in der die Flockfasern 16 gehalten sind.

In Abwandlung zu der Ausgestaltung gemäß Figur 5 zeigt Figur 6 eine Ausgestaltung, bei der der stabförmige Träger 11 einen dreieckigen Querschnitt besitzt und mit dem Überzug 13 in konstanter Schichtdicke überzogen ist, d.h. auch hier folgt die Außenkontur des Überzugs 13 der Außenkontur des Trägers 11. Auf der Außenseite des Überzugs 13 ist wiederrum die Kleberschicht 15 angeordnet, in der die Flockfasern 16 gehalten sind.

Bei der Ausgestaltung gemäß Figur 7 besitzt der Träger 11 einen kreisförmigen Querschnitt, während der Überzug 13, der den Träger 11 umhüllt, einen dreieckigen Querschnitt besitzt. Dies hat zur Folge, dass in den Eckbereichen des dreieckigen Überzugs 13 nur das relativ weiche Material des Überzugs 13 vorhanden ist, so dass die Eckbereiche besonders flexibel sind und sich gut an die Form der Zahnzwischenräume anpassen können. Außenseitig des Überzugs 13 ist wiederrum die Kleberschicht 15 angeordnet, in der die Flockfasern 16 gehalten sind.

## Patentansprüche

1. Interdental-Reiniger mit einem stabförmigen Träger (11) aus Kunststoff, der in seinem hinteren Endbereich ein Griffteil (12) aufweist und in seinem entgegengesetzten vorderen Endbereich eine Beflockung (14) mit Flockfasern (16) aus Kunststoff trägt, **dadurch gekennzeichnet, dass** der stabförmige Träger (11) in seinem vorderen Endbereich mit einem hülsenförmigen Überzug (13) aus einem weich-elastischen Kunststoff versehen ist und dass die Beflockung (14) auf dem Überzug (13) angeordnet ist.

2. Interdental-Reiniger nach Anspruch 1, **dadurch gekennzeichnet, dass** der Überzug (13) vollständig von der Beflockung (14) überdeckt ist.

3. Interdental-Reiniger nach Anspruch 1, **dadurch gekennzeichnet, dass** der Überzug (13) nur in seinem vorderen Endbereich von der Beflockung (14) überdeckt ist.

4. Interdental-Reiniger nach einem der Ansprüche 1 bis 3, **dadurch gekennzeichnet, dass** der Überzug (13) außenseitig mehrere einstückig angeformte, radial nach außen hervorstehende Finger (17) aufweist.

5. Interdental-Reiniger nach Anspruch 4, **dadurch gekennzeichnet, dass** die Finger (17) aus dem gleichen weich-elastischen Material wie der Überzug (13) bestehen.

6. Interdental-Reiniger nach Anspruch 4 oder 5, **dadurch gekennzeichnet, dass** der Überzug (13) in seinem Bereich zwischen seinem vorderen Ende und den Fingern (17) mit der Beflockung (14) versehen ist.

7. Interdental-Reiniger nach einem der Ansprüche 4 bis 6, **dadurch gekennzeichnet, dass** der zwischen den Fingern (17) liegende Bereich des Überzugs (13) frei von der Beflockung (14) ist.

8. Interdental-Reiniger nach einem der Ansprüche 4 bis 6, **dadurch gekennzeichnet, dass** die Beflockung (14) in dem zwischen den Fingern (17) liegenden Bereich des Überzugs (13) angeordnet ist.

9. Interdental-Reiniger nach einem der Ansprüche 1 bis 8, **dadurch gekennzeichnet, dass** der Träger (11) aus einem formstabilen Kunststoff, insbesondere aus Polyprophylen oder Polyamid besteht.

10. Interdental-Reiniger nach einem der Ansprüche 1 bis 9, **dadurch gekennzeichnet, dass** das Kunststoff-Material des Trägers (11) faserverstärkt ist.

11. Interdental-Reiniger nach einem der Ansprüche 1 bis 10, **dadurch gekennzeichnet, dass** der Überzug (13) vollständig oder zumindest überwiegend aus einem thermoplastischen Elastomer, aus einem thermoplastischen Polyurethan oder aus Silikon besteht.

12. Interdental-Reiniger nach einem der Ansprüche 1 bis 11, **dadurch gekennzeichnet, dass** die Beflockung (14) eine Kleberschicht (15) umfasst, auf der die Flockfasern (16) gehalten sind.

13. Interdental-Reiniger nach einem der Ansprüche 1 bis 12, **dadurch gekennzeichnet, dass** die Flockfasern (16) aus Polyamid, Polyprophylen, Polybutylenterephthalat, aus Viskose, aus Acryl, aus Polyester oder aus Baumwollfasern bestehen.

14. Interdental-Reiniger nach einem der Ansprüche 1 bis 13, **dadurch gekennzeichnet, dass** die Länge der Flockfasern vorzugsweise in einem Bereich von 0,2mm bis 2,0mm und insbesondere 1,0mm und 1,5mm liegt.

15. Interdental-Reiniger nach einem der Ansprüche 1 bis 14, **dadurch gekennzeichnet, dass** die Flockfasern eine Feinheit in einem Bereich von 0,09 tex bis 2,2 tex und insbesondere im Bereich von 0,17 tex bis 0,67 tex aufweisen. (1 tex = 1g pro 1000m Länge)

16. Interdental-Reiniger nach einem der Ansprüche 1 bis 15, **dadurch gekennzeichnet, dass** der Träger (11) einen kreisförmigen, einen polygonalen, einen ovalen oder einen dreieckigen Querschnitt aufweist.

17. Interdental-Reiniger nach einem der Ansprüche 1 bis 16, **dadurch gekennzeichnet, dass** der Überzug (13) in seiner Außenkontur der Außenkontur des Trägers (11) folgt.

18. Interdental-Reiniger nach einem der Ansprüche 1 bis 17, **dadurch gekennzeichnet, dass** der Überzug (13) eine dreieckige Außenkontur und der Träger (11) einen kreisförmigen, einen polygonalen oder einen ovalen Querschnitt aufweist, so dass spitz zulaufende Eckbereiche des Überzugs (13) gebildet sind.

## Claims

1. An interdental cleaner with a rod-shaped support (11) which is made of plastic and which, in its rear end region, has a grip part (12) and, in its opposite front end region, has a flocking (14) with flock fibers (16) made of plastic, wherein the rod-shaped support (11) is provided, in its front end region, with a sleeve-shaped cover (13) made of a flexible plastic, and the flocking (14) is arranged on the cover (13).

2. The interdental cleaner as claimed in claim 1, wherein the cover (13) is covered completely by the flocking (14).

3. The interdental cleaner as claimed in claim 1, wherein the cover (13) is covered by the flocking (14) only in its front end region.

4. The interdental cleaner as claimed in one of claims 1 through 3, wherein the outside of the cover (13) has a plurality of integrally formed fingers (17) protruding radially outward.

5. The interdental cleaner as claimed in claim 4, wherein the fingers (17) are made of the same flexible material as the cover (13).

6. The interdental cleaner as claimed in claim 4 or 5, wherein the cover (13) is provided with the flocking (14) in its region between its front end and the fingers (17).

7. The interdental cleaner as claimed in one of claims 4 through 6, wherein the region of the cover (13) lying between the fingers (17) is free of the flocking (14).

8. The interdental cleaner as claimed in one of claims 4 through 6, wherein the flocking (14) is arranged in the region of the cover (13) lying between the fingers (17).

9. The interdental cleaner as claimed in one of claims 1 through 8, wherein the support (11) is made of a dimensionally stable plastic, in particular of polypropylene or polyamide.

10. The interdental cleaner as claimed in one of claims 1 through 9, wherein the plastic material of the support (11) is fiber-reinforced.

11. The interdental cleaner as claimed in one of claims 1 through 10, wherein the cover (13) is made completely or at least predominantly of a thermoplastic elastomer, of a thermoplastic polyurethane or of silicone.

12. The interdental cleaner as claimed in one of claims 1 through 11, wherein the flocking (14) comprises an adhesive layer (15) on which the flock fibers (16) are held.

13. The interdental cleaner as claimed in one of claims 1 through 12, wherein the flock fibers (16) are made of polyamide, polypropylene, polybutylene terephthalate, viscose, acryl, polyester, or cotton fibers.

14. The interdental cleaner as claimed in one of claims 1 through 13, wherein the length of the flock fibers preferably lies in a range of 0.2 mm to 2.0 mm, and in particular in a range between 1.0 mm and 1.5 mm.

15. The interdental cleaner as claimed in one of claims 1 through 14, wherein the flock fibers have a fineness in a range of 0.09 tex to 2.2 tex, and in particular in the range of 0.17 tex to 0.67 tex. (1 tex = 1 g per 1000 m length)

16. The interdental cleaner as claimed in one of claims 1 through 15, wherein the support (11) has a circular, polygonal, oval or triangular cross section.

17. The interdental cleaner as claimed in one of claims 1 through 16, wherein the outer contour of the cover (13) follows the outer contour of the support (11).

18. The interdental cleaner as claimed in one of claims 1 through 17, wherein the cover (13) has a triangular outer contour and the support (11) has a circular, polygonal or oval cross section, such that tapering corner regions of the cover (13) are formed.

## Revendications

1. Dispositif de nettoyage interdentaire avec un support (11) en forme de tige en matière plastique qui comporte dans sa zone d'extrémité arrière une partie de préhension (12) et supporte, dans sa zone d'extrémité avant opposée, un flocage (14) avec des fibres floquées (16) en matière plastique, **caractérisé en ce que** le support (11) en forme de tige est pourvu dans sa zone d'extrémité avant d'un enrobage (13) en forme de fourreau en matière plastique élastique souple et que le flocage (14) est disposé sur l'enrobage (13).

2. Dispositif de nettoyage interdentaire selon la revendication 1, **caractérisé en ce que** l'enrobage (13) est entièrement recouvert par le flocage (14).

3. Dispositif de nettoyage interdentaire selon la revendication 1, **caractérisé en ce que** l'enrobage (13) est uniquement recouvert par le flocage (14) dans sa zone d'extrémité avant.

4. Dispositif de nettoyage interdentaire selon l'une quelconque des revendications 1 à 3, **caractérisé en ce que** l'enrobage (13) comporte du côté extérieur plusieurs doigts (17) saillant vers l'extérieur dans le plan radial et formés d'un seul tenant.

5. Dispositif de nettoyage interdentaire selon la revendication 4, **caractérisé en ce que** les doigts (17) se composent de la même matière élastique souple que l'enrobage (13).

6. Dispositif de nettoyage interdentaire selon la revendication 4 ou 5, **caractérisé en ce que** l'enrobage (13) est pourvu du flocage (14) dans sa région située entre son extrémité avant et les doigts (17) .

7. Dispositif de nettoyage interdentaire selon l'une quelconque des revendications 4 à 6, **caractérisé en ce que** la région de l'enrobage (13) située entre les doigts (17) est exempte de flocage (14).

8. Dispositif de nettoyage interdentaire selon l'une quelconque des revendications 4 à 6, **caractérisé en ce que** le flocage (14) est disposé dans la région de l'enrobage (13) située entre les doigts (17) .

9. Dispositif de nettoyage interdentaire selon l'une quelconque des revendications 1 à 8, **caractérisé en ce que** le support (11) se compose d'une matière plastique à forme stable, notamment de polypropylène ou de polyamide.

10. Dispositif de nettoyage interdentaire selon l'une quelconque des revendications 1 à 9, **caractérisé en ce que** la matière plastique du support (11) est renforcée en fibres.

11. Dispositif de nettoyage interdentaire selon l'une quelconque des revendications 1 à 10, **caractérisé en ce que** l'enrobage (13) se compose entièrement ou au moins essentiellement d'un élastomère thermoplastique, d'un polyuréthane thermoplastique ou de silicone.

12. Dispositif de nettoyage interdentaire selon l'une quelconque des revendications 1 à 11, **caractérisé en ce que** le flocage (14) comprend une couche de colle (15) sur laquelle les fibres floquées (16) sont maintenues.

13. Dispositif de nettoyage interdentaire selon l'une quelconque des revendications 1 à 12, **caractérisé en ce que** les fibres floquées (16) se composent de polyamide, de polypropylène, de polytéréphtalate de butylène, de viscose, d'acrylique, de polyester ou de soies de coton.

14. Dispositif de nettoyage interdentaire selon l'une quelconque des revendications 1 à 13, **caractérisé en ce que** la longueur des fibres floquées se situe de préférence dans une plage de 0,2 mm à 2, 0 mm et notamment de 1,0 mm et 1,5 mm.

15. Dispositif de nettoyage interdentaire selon l'une quelconque des revendications 1 à 14, **caractérisé en ce que** les fibres floquées présentent une finesse dans une plage de 0,09 tex à 2,2 tex et notamment dans la plage de 0,17 tex à 0,67 tex (1 tex = 1 g /1000 m de long)

16. Dispositif de nettoyage interdentaire selon l'une quelconque des revendications 1 à 15, **caractérisé en ce que** le support (11) présente une section transversale en forme de cercle, de polygone, d'ovale ou triangulaire.

17. Dispositif de nettoyage interdentaire selon l'une quelconque des revendications 1 à 16, **caractérisé en ce que** l'enrobage (13) suit dans son contour extérieur le contour extérieur du support (11).

18. Dispositif de nettoyage interdentaire selon l'une quelconque des revendications 1 à 17, **caractérisé en ce que** l'enrobage (13) comporte un contour extérieur triangulaire et que le support (11) présente une section transversale en forme de cercle, de polygone ou d'ovale, de sorte que les zones d'angle de l'enrobage (13) se terminent en pointe.
